(19) Europäisches Patentamt
European Patent Office
Office européen des brevets

(11) Publication number: **0 450 537 B1**

(12) **EUROPEAN PATENT SPECIFICATION**

(45) Date of publication of patent specification: **12.04.95**

(51) Int. Cl.$^6$: **C08L 83/04**, C08K 5/00

(21) Application number: **91105088.8**

(22) Date of filing: **28.03.91**

(54) **Curable organopolysiloxane composition.**

(30) Priority: **29.03.90 JP 81981/90**

(43) Date of publication of application:
**09.10.91 Bulletin 91/41**

(45) Publication of the grant of the patent:
**12.04.95 Bulletin 95/15**

(84) Designated Contracting States:
**DE FR GB**

(56) References cited:
**EP-A- 0 406 664**
**US-A- 4 257 936**
**US-A- 4 340 710**

(73) Proprietor: **Dow Corning Toray Silicone Company Ltd.**
**3-16, Nihombashi-muromachi 2-chome,**
**Chuo-ku**
**Tokyo 103 (JP)**

(72) Inventor: **Kasuya, Akira**
**6, 1-chome, Yushudai Nishi**
**Ichihara-shi,**
**Chiba Pref. (JP)**

(74) Representative: **Spott, Gottfried, Dr.**
**Spott, Weinmiller & Partner**
**Sendlinger-Tor-Platz 11**
**D-80336 München (DE)**

EP 0 450 537 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a strongly self- bonding, curable organopolysiloxane composition which is useful in a variety of sectors, for example, for the bonding, fixing, insulated sealing, and coating of electrical and electronic components; for the bonding, fixing, and gap sealing of mechanical components, tools, and devices; for the lamination of textiles and fabrics, and so forth.

Organopolysiloxane compositions are already known which cure through an addition reaction between SiH- containing organopolysiloxane and unsaturated hydrocarbon- containing organopolysiloxane in the presence of a hydrosilylation-reaction catalyst. However, with regard to the application of such compositions as adhesives, the poor self-bondability of these compositions necessitates the addition of various types of adhesion promoters in order to equip such compositions with self-bondability. As a particular matter, the following compositions evidence an excellent self-bondability:

compositions which contain acryloxy group-containing or methacryloxy group-containing organoalkoxysilane, Japanese Patent Publication Number 51-28309 (28,309/76);

compositions which contain an organosiloxane oligomer which possesses the epoxy, alkenyl, and alkoxy groups, Japanese Patent Publication Number 52-48146 (48,146/77), (U.S. 4,082,726); and

compositions which contain triallyl isocyanurate and trialkoxysilane or hydrolyzate thereof, Japanese Patent Application Laid Open (Kokai or Unexamined) Number 51-139854 (139,854/76).

The above-listed compositions do in fact evidence an excellent self-bondability when the target material for adhesion (designated below as the adherend) is an inorganic material such as a glass or metal; however, they do not develop this excellent self-bondability when the adherend is an organic resin such as a plastic or the like. As a consequence, their use with organic resin adherends requires the rather tedious process of treating the organic resin's bonding surface with a bonding agent, for example, a primer or an adhesion promoter, prior to application of the curable organopolysiloxane composition.

The present inventor conducted extensive research into curable organopolysiloxane compositions which would evidence an excellent self-bondability relative to organic resins, and as a result discovered that the use of special crosslinkers eliminates the problem associated with the prior art and affords a curable organopolysiloxane composition which has an excellent self-bondability for organic resins. The present invention was achieved based on this finding.

The present invention takes as its object the introduction of a curable organopolysiloxane composition which has an excellent self-bondability and which thus eliminates the aforesaid problem.

The object of the present invention is achieved by means of a curable organopolysiloxane composition which consists of

(A) organopolysiloxane which contains at least 2 silicon-bonded alkenyl groups in each molecule,

(B) cyclic siloxane as represented by the formula

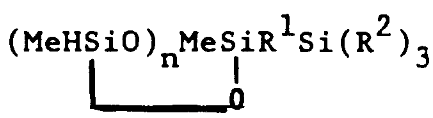

wherein $R^1$ is a substituted or unsubstituted divalent organic group, $R^2$ is the acetoxy group or an alkoxy group having 1 to 4 carbon atoms, $_n$ is an integer with a value of 3 to 5, and Me represents the methyl group; wherein component (B) is added in a quantity which provides values of 0.5 : 1 to 5 : 1 for the ratio between the number of moles of silicon-bonded hydrogen atoms in component (B) and the total number of moles of alkenyl groups in component (A) plus component (C),

(C) triallyl isocyanurate, added at 0.1 to 5 weight% referred to the total quantity of component (A) plus component (B), and

(D) a catalytic quantity of a hydrosilylation-reaction catalyst.

To explain the present invention in greater detail, the organopolysiloxane comprising component (A) is the main component of the composition of the present invention, and it should contain at least 2 silicon-bonded alkenyl groups in each molecule. This organopolysiloxane comprising component (A) undergoes curing through an addition reaction with the silicon-bonded hydrogen atoms in component (B) in the presence of the hydrosilylation-reaction catalyst comprising component (D).

This component (A) may have any of a straight-chain, branched, cyclic, network, or three-dimensional structure, and its molecular weight is not specifically restricted. However, from the standpoint of ease of mixing with components (B) through (D) as well as a good post-cure adhesiveness, it is preferred that at

least half of it be straight chain or branched and that its viscosity at 25 degrees Centigrade be 100 to 1,000,000 mPa•s (centipoise).

The silicon-bonded alkenyl groups in component (A) are exemplified by vinyl, allyl, propenyl, butenyl, pentenyl, hexenyl, heptenyl, octenyl, nonenyl, and decenyl. It is preferred from the standpoint of reactivity that the double bond in the alkenyl group be positioned at the terminal remote from or distal to the silicon atom to which the alkenyl group is bonded.

Moreover, other than the silicon-bonded alkenyl group, the silicon-bonded organic groups in component (A) are exemplified by alkyl groups such as methyl, ethyl, propyl, butyl, pentyl and hexyl; aryl groups such as phenyl, tolyl and xylyl; aralkyl groups such as benzyl and phenethyl; and haloalkyl groups such as trifluoropropyl and chloromethyl. Small quantities of the hydroxyl group, alkoxy group, may be present to the extent that the object of the present invention is not compromised.

With regard to the silicon-bonded organic groups in component (A) other than the silicon-bonded alkenyl groups, it is preferred from the standpoints of the economics and adhesiveness that methyl comprise at least half of the groups bonded to silicon.

The component (B) used in the present invention functions as a crosslinker for the composition of the present invention, and the composition of the present invention is cured by this component's addition reaction with the organopolysiloxane comprising component (A) in the presence of the hydrosilylation-reaction catalyst comprising component (D).

The group $R^1$ in its formula is a substituted or unsubstituted divalent organic group in the form of an alkylene group or alkyleneoxyalkylene group. The group $R^2$ is the acetoxy group or an alkoxy group such as methoxy, ethoxy and isopropoxy. Me in the formula is the methyl group.

The value of $_n$ corresponds to the number of methylhydrogensiloxane repeat units and should be an integer with a value of 3 to 5. It is difficult to obtain the starting methylhydrogencyclosiloxane when $_n$ is less than 3, while purification of the obtained product is difficult when $_n$ exceeds 5.

The component (B) used in the present invention can be synthesized by the method disclosed in, for example, Japanese Patent Application Laid Open Number 54-48853 (48,853/79) and U.S.-A-4,257,936. Component (B) may be concretely exemplified as follows.

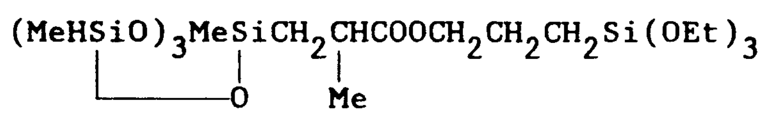

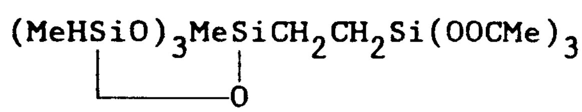

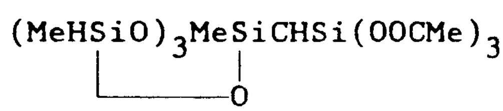

and, preferably,

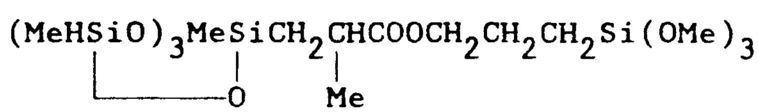

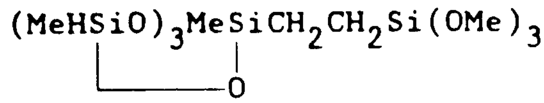

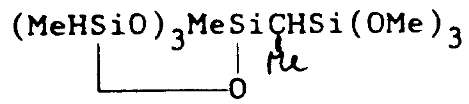

both for their ease of synthesis and for the excellent adhesiveness obtained through the addition of these components to the curable organopolysiloxane composition.

Component (B) should be added to the composition according to the present invention in a quantity which affords values of 0.5 : 1 to 5 : 1 and preferably 0.8 : 1 to 3:1 for the ratio between the number of moles of silico n-bonded hydrogen atoms in component (B) and the total number of moles of alkenyl groups in components (A) plus (C).

Crosslinking will be unsatisfactory at less than 0.5 moles or more than 5 moles silicon-bonded hydrogen atoms in component (B) per 1 mole total alkenyl groups in components (A) plus (C).

The triallyl isocyanurate comprising the component (C) of the present invention is a crosslinker for the composition according to the present invention. Along with component (B), it functions to cure the composition of the present invention, but in this case through an addition reaction with the silicon-bonded hydrogen atoms in component (B) in the presence of the hydrosilylation-reaction catalyst comprising component (D). Curing will be incomplete when only component (B) is present, but curing is brought to completion by the co-presence of component (C). Moreover, the adhesiveness of the cured product obtained by curing the curable organopolysiloxane composition declines when only component (B) is present, and the co-presence of component (C) is required in particular to obtain a high level of adhesiveness for organic resins.

Component (C) should be added in a quantity which corresponds to 0.1 to 5 weight% and preferably 0.2 to 2 weight% referred to the total quantity of components (A) plus (B). An excellent adhesiveness for organic resins is not obtained when component (C) is present at less than 0.1 weight%, while its presence in excess of 5 weight% impedes curing.

The hydrosilylation reaction-catalyst comprising the present invention's component (D) is a catalyst of the addition reaction between the silicon-bonded hydrogen atoms in component (B) and the alkenyl groups in components (A) and (C). This hydrosilylation-reaction catalyst constituting component (D) comprises the metals of Group VIII of the Periodic Table (platinum, rhodium, palladium, cobalt, nickel) and their compounds, and platinum-type catalysts are particularly useful due to their excellent reaction activity.

Said platinum-type catalysts are concretely exemplified by platinum powder, platinum on asbestos, platinumon carbon, chloroplatinic acid, alcohol solutions of chloroplatinic acid, olefin complexes of platinum, alkenylsiloxane complexes of platinum, beta-diketone complexes of platinum, and phosphine complexes of platinum.

No particular restriction is placed on the quantity of addition of component (D) to the composition of the present invention, and it should simply be added in a generally used catalytic quantity. When a platinum-type catalyst is used as the hydrosilylation-reaction catalyst, preferred additions will provide 0.1 ppm to 100 ppm as the quantity of platinum or platinum-type metal based on the total quantity of components (A) through (C).

The composition of the present invention can be obtained simply by mixing components (A) through (D), but various additives may also be introduced as long as the object of the present invention is not compromised. These additives which may be introduced into the composition of the present invention are exemplified by inorganic fillers such as dry-method silicas, wet-method silicas, natural silica, diatomaceous earth, silica balloons, calcium carbonate, carbon black, titanium dioxide, aluminum oxide, aluminum hydroxide and zinc oxide; and also by colorants, thermal stabilizers, oxidation inhibitors, flame retardants. Furthermore, it will be advantageous to add small quantities of acetylenic compounds, amine compounds, mercaptan compounds, or phosphorus compounds, in order to adjust or control the curing rate of the curable organopolysiloxane composition of the present invention. Solvent or silicone oil may be introduced in order to reduce the viscosity.

The composition of the present invention can be prepared through the use of various types of kneading and mixing devices, for example, planetary mixers, kneader mixers, screw mixers, impeller mixers, static mixers, two-roll mills, three-roll mills and twin-screw extruders.

The composition of the present invention can be cured at room temperature or with heating, but heating more or less into the range of 70 to 200 degrees Centigrade is preferred in order to obtain a superior adhesiveness for inorganics such as glasses, metals, and metal oxides and in particular for organic resins such as plastics, for example, organic resins such as phenolic resins, epoxy resins, polyamide resins, unsaturated polyester resins, polyethylene terephthalate resins, polybutylene terephthalate resins, polyphenylene sulfide resins, polycarbonate resins and polyimide resins.

Illustrative examples of the present invention are given below, in which parts = weight parts. Unless stated otherwise, the measurement value for the adhesiveness is the value measured at 25 degrees Centigrade. Also, Me = methyl in the formulas.

Example 1

A composition A was prepared by mixing the following to homogeneity: 100 parts dimethylvinylsiloxy-terminated dimethylpolysiloxane with an average degree of polymerization (DP) of 300, 20 parts dry-method silica (specific surface area = 200 $m^2/g$) whose surface had been treated with hexamethyldisilazane, and a chloroplatinic acid- tetramethyldivinyldisiloxane complex in a quantity sufficient to give 5 ppm as platinum metal referred to the dimethylpolysiloxane.

A composition B was then prepared by mixing 1.2 parts triallyl isocyanurate and 3 parts of the following cyclic siloxane

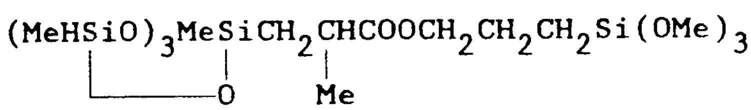

into the aforesaid composition A.

For comparison, compositions C and D were prepared by the addition, respectively, of 3 parts or 1.5 parts of only the same cyclic siloxane to composition A, while a composition E was prepared by the addition to composition A of only 1.2 parts triallyl isocyanurate.

Each of compositions B, C, D, and E was coated on polybutylene terephthalate resin (PBTP), polyphenylene sulfide resin (PPS), and polycarbonate resin (PC) and then cured by heating. The curing conditions consisted of standing for 1 hour in an oven at 120 degrees Centigrade. Compositions B and D underwent curing, while composition C experienced a defective cure, and composition E was completely uncured. The adhesiveness of the cured organopolysiloxane elastomers was examined, and these results are reported in Table 1. 0.01 Part 3-methyl-1-butyne-3-ol was added to compositions C and D as curing retarder in order to obtain suitable working times.

Table 1

| Resin | Present Invention Composition B | Comparison Example Composition D |
|---|---|---|
| PBTP | + + | + |
| PPS | + + | x |
| PC | + + | x |

+ + = excellent adhesion
+ = adhesion with exfoliation
x = exfoliation

Example 2

A composition F was prepared by the addition of 1.2 parts triallyl isocyanurate and 2.5 parts cyclic siloxane (additive X) to composition A prepared as in Example 1. Additive X consisted of the mixture of the cyclic siloxanes

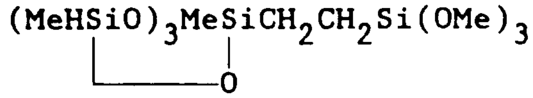

and

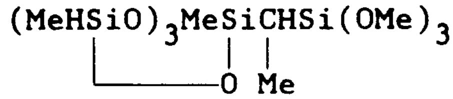

in an approximately 8 : 2 weight ratio, respectively.

For comparison, compositions G and H were prepared by the addition, respectively, of 2.5 parts or 1.5 parts of onlyadditive X to composition A. Also for comparison, a composition J was prepared by the addition to composition A of 1.2parts triallyl isocyanurate and, as crosslinker, 1.8 parts trimethylsiloxy-terminated methylhydrogensiloxane-dimethylsiloxane copolymer with an average DP of 10 ( an average of 5 methylhydrogensiloxane units were present in each molecule). As in Example 1, 0.01 part 3-methyl-1 -butyne-3-ol was added to compositions G and H in orde r to obtain suitable working times.

The adhesive strength of each composition was then measured. The adherends listed in Table 2 were used for the adhesive strength measurements. Tensile adhesion specimens were prepared and the tensile adhesive strength was measured based on JIS K 6301. The curing conditions consisted of standing for 1 hour at 120 degrees Centigrade. Compositions F, H, and J underwent curing, while the cure of composition G was so poor that it was uncured. The results of these measurements are reported in Table 2.

Table 2

| | Adhesive Strength MPa ($kgf/cm^2$) | | |
|---|---|---|---|
| | Present Invention | Comparison Examples | |
| Adherend | Composition F | Composition H | Composition J |
| aluminum | 3,7 (38) | 3,0 (31) | 2,4 (24) |
| copper | 3,6 (37) | 1,3 (13) | 1,3 (13) |
| iron | 4,0 (41) | 2,2 (22) | 1,0 (10) |
| nickel | 2,3 (23) | 1,1 (11) | 0,3 (3) |
| brass | 3,0 (31) | <0,1 (< 1) | <0,1 (< 1) |
| bakelite | 3,2 (33) | 1,2 (12) | 2,0 (20) |
| epoxy glass | 3,4 (35) | 1,2 (12) | 1,8 (18) |
| PBTP | 1,7 (17) | 1,0 (10) | 1,7 (17) |
| nylon-6 | 1,1 (11) | <0,1 (< 1) | <0,1 (< 1) |
| PPS | 0,3 (3) | <0,1 (< 1) | <0,1 (< 1) |
| PC | 1,6 (16) | <0,1 (< 1) | <0,1 (< 1) |

Because the present invention's curable organopolysiloxane composition consists of components (A) through (D) and in particular because it contains as crosslinkers the cyclic siloxane comprising component (B) and the triallyl isocyanurate comprising component (C), this curable organopolysiloxane composition not only cures, but its cured product also evidences an excellent self-bondability relative to organic resins.

## Claims

1. A curable organopolysiloxane composition which comprises

(A) organopolysiloxane which contains at least 2 silicon-bonded alkenyl groups in each molecule,

(B) cyclic siloxane as represented by the formula

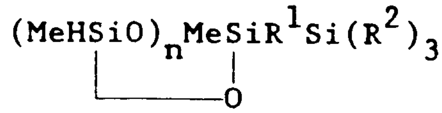

wherein $R^1$ is a substituted or unsubstituted divalent organic group in the form of an alkylene group or alkylene oxyalkylene group, $R^2$ is the acetoxy group or an alkoxy group, $_n$ is an integer with a value of 3 to 5, and Me represents the methyl group; wherein component (B) is added in a quantity which provides values of 0.5 : 1 to 5 : 1 for the ratio between the number of moles of silicon-bonded hydrogen atoms in component (B) and the total number of moles of alkenyl groups in component (A) plus component (C),
(C) triallyl isocyanurate, added at 0.1 to 5 weight% referred to the total quantity of component (A) plus component (B), and
(D) a catalytic quantity of a hydrosilylation-reaction catalyst.

**2.** A curable organopolysiloxane composition according to Claim 1 in which component (B) has the structure

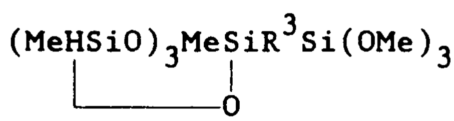

wherein $R^3$ is a divalent organic group selected from the group consisting of

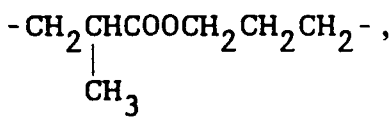 , $-CH_2CH_2-$, and 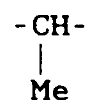

and Me represents the methyl group.

**3.** A method for bonding an organopolysiloxane composition to an organic resin, said method comprising
(i) applying a coating of a curable organopolysiloxane composition to the bonding surface of the organic resin without treating said surface with a bonding agent, and
(ii) causing the curable composition to cure while in contact with said surface, said curable organopolysiloxane composition comprising
(A) organopolysiloxane which contains at least 2 silicon-bonded alkenyl groups in each molecule,
(B) cyclic siloxane as represented by the formula

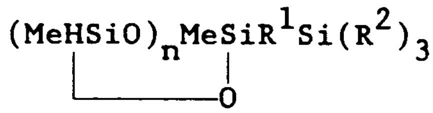

wherein $R^1$ is a substituted or unsubstituted divalent organic group, $R^2$ is the acetoxy group or an alkoxy group having 1 to 4 carbon atoms, $_n$ is an integer with a value of 3 to 5, and Me represents the methyl group; wherein component (B) is added in a quantity which provides values of 0.5 : 1 to 5 : 1 for the ratio between the number of moles of silicon-bonded hydrogen atoms in component (B) and the total number of moles of alkenyl groups in component (A) plus component (C),

(C) triallyl isocyanurate, added at 0.1 to 5 weight% referred to the total quantity of component (A) plus component (B), and
(D) a catalytic quantity of a hydrosilylation-reaction catalyst.

**4.** A method according to claim 3 wherein said organic resin curing is selected form the group consisting of phenolic resins, epoxy resins, polyamide resins, unsaturated polyester resins, polyethylene terephthalate resins, polybutylene terephthalate resins, polyphenylene sulfide resins, polycarbonate resins and polyimide resins.

**5.** A method according to claim 4 wherein component (A) is a dimethylvinylsiloxy-terminated dimethylpolysiloxane with an average degree of polymerization of 300 and component (B) has the structure

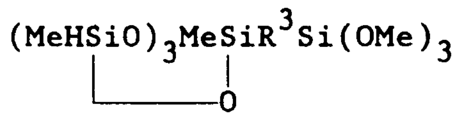

wherein $R^3$ is a divalent organic group selected from the group consisting of

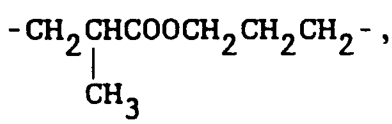 , $-CH_2CH_2-$, and 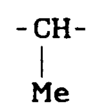

and Me represents the methyl group.

**Patentansprüche**

**1.** Härtbare Organopolysiloxanzusammensetzung umfassend
(A) ein Organopolysiloxan, das mindestens zwei siliziumgebundene Alkenylgruppen in jedem Molekül enthält,
(B) ein cyclisches Siloxan der Formel

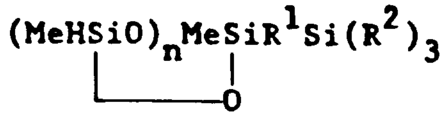

worin $R^1$ eine substituierte oder unsubstituierte divalente organische Gruppe in Form einer Alkylengruppe oder Alkylenoxyalkylengruppe ist, $R^2$ die Acetoxygruppe oder eine Alkoxygruppe ist, n eine ganze Zahl mit einem Wert von 3 bis 5 ist und Me die Methylgruppe bedeutet; worin Komponente (B) in einer Menge zugegeben wird, die Werte von 0,5:1 bis 5:1 für das Verhältnis der Anzahl von Mol siliziumgebundenen Wasserstoffatomen in Komponente (B) zu der Gesamtanzahl Mol Alkenylgruppen in Komponente (A) + in Komponente (C) liefert,
(C) Triallylisocyanurat, das in einem Anteil von 0,1 bis 5 Gew.-% bezogen auf die Gesamtmenge von Komponente (A) + Komponente (B) zugegeben wird und
(D) eine katalytische Menge eines Katalysators für die Hydrosilylierungsreaktion.

**2.** Härtbare Organopolysiloxanzusammensetzung nach Anspruch 1, worin Komponente (B) die Strukturformel

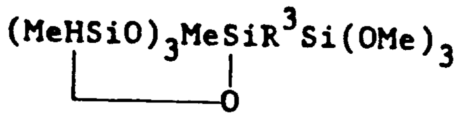

hat, worin $R^3$ eine divalente organische Gruppe ist, ausgewählt aus der Gruppe bestehend aus

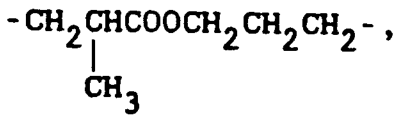, $-CH_2CH_2-$, und 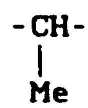

und Me die Methylgruppe bedeutet.

**3.** Verfahren zum Verbinden einer Organopolysiloxanzusammensetzung mit einem organischen Harz, wobei das Verfahren umfaßt, daß man

(i) eine Beschichtung aus einer härtbaren Organopolysiloxanzusammensetzung auf die Klebefläche des organischen Harzes aufträgt, ohne die Oberfläche mit einem Bindemittel zu behandeln und

(ii) die härtbare Zusammensetzung härten läßt, während sie in Kontakt mit der Oberfläche ist, wobei die härtbare Organopolysiloxanzusammensetzung umfaßt

(A) ein Organopolysiloxan, das mindestens zwei siliziumgebundene Alkenylgruppen in jedem Molekül enthält,

(B) ein cyclisches Siloxan der Formel

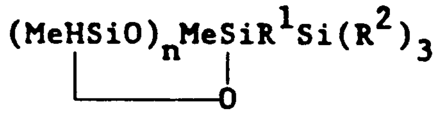

worin $R^1$ eine substituierte oder unsubstituierte divalente organische Gruppe ist, $R^2$ die Acetoxygruppe oder eine Alkoxygruppe mit 1 bis 4 Kohlenstoffatomen ist, $\underline{n}$ eine ganze Zahl mit einem Wert von 3 bis 5 ist und Me die Methylgruppe bedeutet; worin Komponente (B) in einer Menge zugegeben wird, die Werte von 0,5:1 bis 5:1 für das Verhaltnis der Anzahl von Mol siliziumgebundenen Wasserstoffatomen in Komponente (B) zu der Gesamtanzahl Mol Alkenylgruppen in Komponente (A) + in Komponente (C) liefert,

(C) Triallylisocyanurat, das in einem Anteil von 0,1 bis 5 Gew.-% bezogen auf die Gesamtmenge von Komponente (A) + Komponente (B) zugegeben wird und

(D) eine katalytische Menge eines Katalysators für die Hydrosilylierungsreaktion.

**4.** Verfahren nach Anspruch 3, worin das organische Harz ausgewählt ist aus der Gruppe bestehend aus Phenolharzen, Epoxyharzen, Polyamidharzen, ungesättigten Polyesterharzen, Polyethylenterephthalatharzen, Polybutylenterephthalatharzen, Polyphenylensulfidharzen, Polycarbonatharzen und Polyimidharzen.

**5.** Verfahren nach Anspruch 4, worin Komponente (A) ein Dimethylpolysiloxan mit Dimethylvinylsiloxyendgruppen mit einem durchschnittlichen Polymerisationsgrad von 300 ist und Komponente (B) die Strukturformel

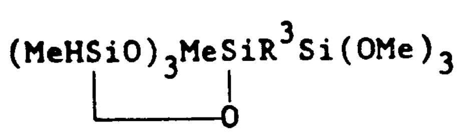

hat, worin $R^3$ eine divalente organische Gruppe ausgewählt aus der Gruppe bestehend aus

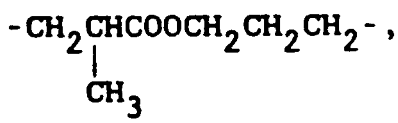, $-CH_2CH_2-$, und 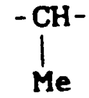

ist und Me die Methylgruppe bedeutet.

## Revendications

1. Une composition d'organopolysiloxane durcissable comprenant
   (A) un organopolysiloxane contenant au moins deux groupements alcényles liés au silicium dans chaque molécule,
   (B) un siloxane cyclique représenté par la formule

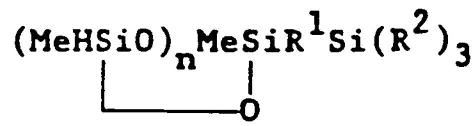

   dans laquelle $R^1$ est un groupement organique divalent substitué ou non substitué sous la forme d'un groupement alkylène ou d'un groupement alkylèneoxyalkylène, $R^2$ est le groupement acétoxy ou un groupement alcoxy, n est un nombre entier ayant une valeur de 3 à 5, et Me représente le groupement méthyle; dans laquelle le composant (B) est ajouté en une quantité qui fournit des valeurs de 0,5 : 1 à 5 : 1 pour le rapport entre le nombre de moles d'atomes d'hydrogène liés au silicium dans le composant (B) et le nombre total de moles des groupements alcényles dans le composant (A) plus le composant (C),
   (C) de l'isocyanurate de triallyle, ajouté à raison de 0,1 à 5% en poids par rapport à la quantité totale de composant (A) plus composant (B), et
   (D) une quantité catalytique d'un catalyseur de réaction d'hydrosilylation.

2. Une composition d'organopolysiloxane durcissable selon la revendication 1 dans laquelle le composant (B) a la structure

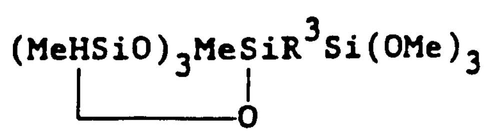

   dans laquelle $R^3$ est un groupement organique divalent choisi dans le groupe composé de

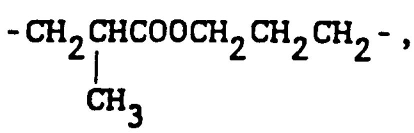, $-CH_2CH_2-$, et 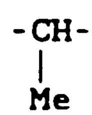

   et Me représente le groupement méthyle.

3. Un procédé pour coller une composition d'organopolysiloxane à une résine organique, comprenant les étapes consistant à
   (i) appliquer un revêtement de composition d'organopolysiloxane durcissable à la surface de collage de la résine organique sans traitement de ladite surface avec un agent adhésif, et
   (ii) faire durcir la composition durcissable tandis qu'elle est au contact de ladite surface, ladite composition d'organopolysiloxane durcissable comprenant

(A) un organopolysiloxane contenant au moins deux groupements alcényles liés au silicium dans chaque molécule,

(B) un siloxane cyclique représenté par la formule

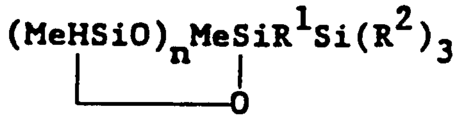

dans laquelle $R^1$ est un groupement organique divalent substitué ou non substitué, $R^2$ est le groupement acétoxy ou un groupement alcoxy ayant de 1 à 4 atomes de carbone, n est un nombre entier ayant une valeur de 3 à 5, et Me représente le groupement méthyle; dans laquelle le composant (B) est ajouté en une quantité qui fournit des valeurs de 0,5 : 1 à 5 : 1 pour le rapport entre le nombre de moles d'atomes d'hydrogène liés au silicium dans le composant (B) et le nombre total de moles des groupements alcényle dans le composant (A) plus le composant (C),

(C) de l'isocyanurate de triallyle, ajouté à raison de 0,1 à 5% en poids par rapport à la quantité totale de composant (A) plus composant (B), et

(D) une quantité catalytique d'un catalyseur de réaction d'hydrosilylation.

4. Un procédé selon la revendication 3 dans lequel ladite résine organique est choisie dans le groupe composé des résines phénoliques, des résines époxy, des résines de polyamide, des résines de polyester insaturées, des résines de téréphtalate de polyéthylène, des résines de téréphtalate de polybutylène, des résines de sulfure de polyéthylène, des résines de polycarbonate et des résines de polyimide.

5. Un procédé selon la revendication 4 dans lequel ledit composant (A) est un diméthylpolysiloxane à terminaisons diméthylvinylsiloxy avec un degré moyen de polymérisation de 300 et le composant (B) a la structure

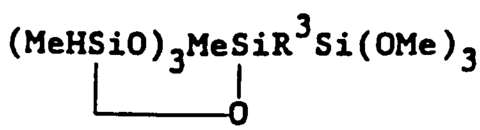

dans laquelle $R^3$ est un groupement organique divalent choisi parmi le groupe composé de

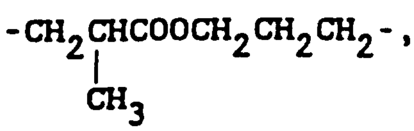 , 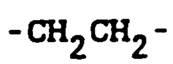 , 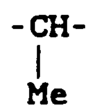

et Me représente le groupement méthyle.